# EUROPEAN PATENT SPECIFICATION

(11) **EP 1 719 401 B1**
(45) Date of publication and mention of the grant of the patent: **22.06.2011**
(21) Application number: 06112002.8
(22) Date of filing: 30.03.2006
(51) Int. Cl.: A01D 34/76

(54) **Mower deck**
Mähwerkgehäuse
Chassis de tondeuse

(30) Priority: 14.04.2005 US 105858
(43) Date of publication of application: 08.11.2006
(73) Proprietor: Deere & Company, Moline, IL 61265-8098 (US)
(72) Inventor: van Wouw, Rob, 7581, DB Losser (NL)
(74) Representative: Löser, Iris

(56) References cited:
- DE-U1- 20 302 485
- US-A- 3 774 464
- US-A- 4 429 515
- US-A1- 2003 000 191

## Description

The present invention relates generally to a mower deck having three rotary cutting blades mounted to the lower ends of three vertical spindles.

Belt drive systems are used on grass and vegetation mowing machines for transmitting power from an engine drive shaft or PTO to rotary cutting blades under a mower deck. Belt drive systems commonly known as mule drives are used to transmit power from a horizontally oriented drive shaft or PTO to vertically oriented spindles. Mule drives for mower decks include one or more guide sheaves that twist the belt to change its orientation from vertical to horizontal. An example of a mule drive for a mower deck is shown in US Patent No. 4,325,210.

The power a mule drive can transmit may be limited by the thickness and/or strength of the belt. However, very thick and/or strong belts may not be sufficiently flexible to use in a mule drive. It can be difficult to twist and change the orientation of such a belt. As a result, the application of mule drives is limited.

Efforts have been made to design mule drives that can carry more power with conventional belts. For example, US Patent No. 6,651,413 relates to a mule drive for a mower deck that shows two belts for transmitting power from a drive sheave on a horizontal shaft to a driven sheave on a vertical shaft. The driven sheave then may be coupled by an additional belt to one or more spindles attached to cutting blades. The third belt adds to the cost and complexity of this mule drive. Additionally, the configuration of idler pulleys at various outboard locations relative to the drive sheave also increases the cost and complexity of this mule drive.

DE20302485 U1 describes a belt drive for a multiple mower deck with three rotating cutting blades. A drive shaft drives a primary drive sheave. A first belt engages the primary drive sheave, a first guide sheave and a driven sheave of the cutting blades. A second belt engages also the primary drive sheave, a second guide sheave, another driven sheave of the cutting blades and the driven sheaves not engaged by the first endless belt. The rotation axes of all sheaves are parallel.

A simplified and improved mule drive is needed for a mower deck housing three or more rotary cutting blades. A mule drive is needed that does not require a third belt between a driven sheave and spindles attached to the rotary cutting blades. A mule drive is needed that can transmit higher power to drive wider mower decks, and provide longer belt life.

It is therefore the object of the present invention to comply with one, some or all of these needs.

This object is met according to the invention by the teaching of claim 1, while features developing the solution in an advantageous manner are set forth in the further claims.

The present invention provides a simplified and improved twin belt mule drive for a mower deck with three rotary cutting blades. The twin belt mule drive transmits less load through each of the two belts, leading to increased belt life. The twin belt mule drive can transmit higher power to drive wider mower decks. In the present invention, all three rotary cutting blades are driven by two belts. The drive shaft or PTO from the engine has a pair of drive sheaves. The two belts are twisted from a vertical to a horizontal plane by two pairs of guide sheaves. Each of the two belts engages at least one of the driven sheaves that is not engaged by the other belt.

Such apparatus may comprise a mower deck having first, second and third vertical spindles extending therethrough and a cutting blade mounted to each spindle; first and second endless belts, each belt engaging a separate drive sheave mounted to a drive shaft and engaging two guide sheaves mounted to shafts transverse to the drive shaft; the first endless belt engaging a first driven sheave mounted to the first vertical spindle, the second endless belt engaging a second driven sheave mounted to the second vertical spindle, and at least one of the first and second endless belts engaging a third driven sheave mounted to the third vertical spindle.

At least one of the drive sheaves and at least one of the guide sheaves may have a larger outer diameter than another drive sheave and guide sheave.

A mule drive for a mower deck may comprise a pair of drive sheaves positioned on a horizontal PTO shaft behind the mower deck, the pair of drive sheaves including a first larger diameter drive sheave and a second smaller diameter drive sheave, two pairs of guide sheaves positioned on horizontal shafts transverse to the horizontal PTO shaft and below the drive sheaves, a plurality of spindles extending through the mower deck, each spindle having a cutting blade mounted to a lower end thereof and a driven sheave mounted to an upper end thereof, a first endless belt engaging the smaller diameter drive sheave, two of the guide sheaves, and at least one of the driven sheaves, and a second endless belt engaging the larger diameter drive sheave, two of the guide sheaves, and at least two of the driven sheaves.

The mower deck may cover a left cutting chamber, a middle cutting chamber, and a right cutting chamber.

An embodiment of the invention described below is shown in the drawings, in which:
- Fig. 1: is a top perspective view of a twin belt mule drive according to a first embodiment of the invention.
- Fig. 2: is a bottom perspective view of a twin belt mule drive according to a first embodiment of the invention.

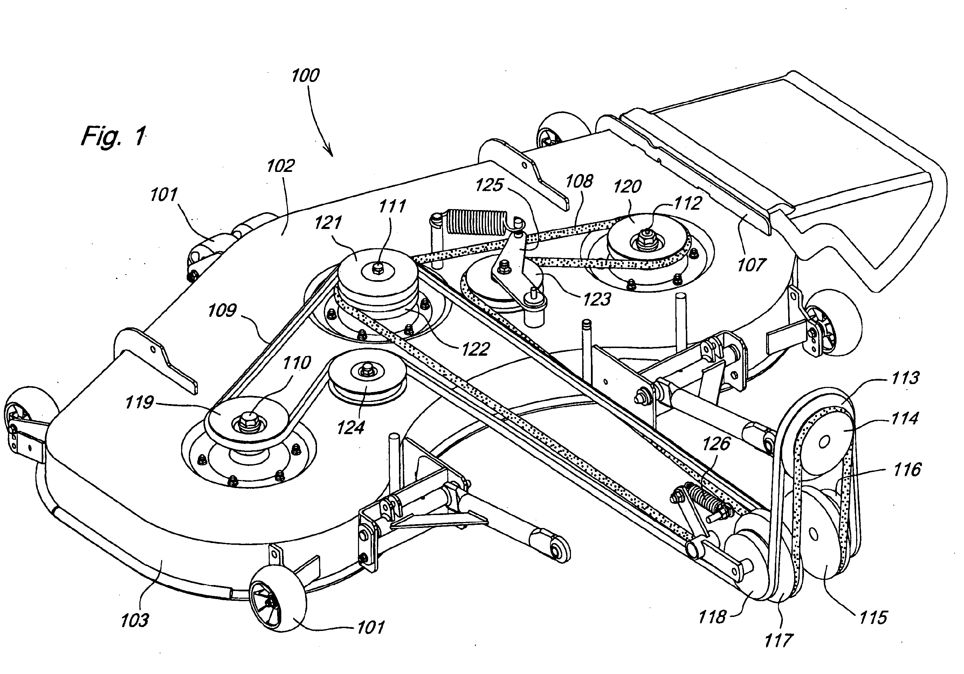

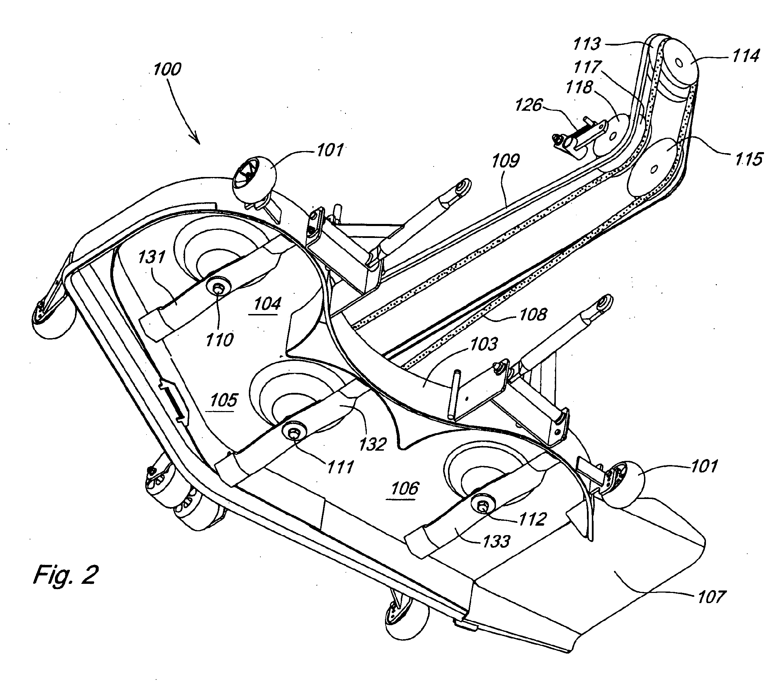

Figs. 1 and 2 show a first embodiment of the invention, in which a twin belt mule drive is used on mower deck 100 to drive three rotary cutting blades 131, 132, 133. Mower deck 100 may be removably mounted to or suspended from the frame of a tractor or similar vehicle at or near the front or middle of the vehicle. The mower deck may have anti-scalp wheels 101 attached to its outer perimeter.

The vehicle may have an internal combustion engine or other power source, a transmission, and one or more ground engaging wheels. The engine may provide at least about 15 horsepower to a horizontal drive shaft or PTO.

In one embodiment, mower deck 100 may have a top surface 102, downwardly depending sides 103, and an overall width of at least about 1.2192 m (48 inches). The twin belt drive of the present invention is capable of driving significantly wider mower decks. Blades 131-133 under the mower deck may be housed in adjacent and interconnected cutting chambers 104-106. The middle cutting chamber 105 may be positioned slightly forward of the left and right cutting chambers 104, 106. Each cutting chamber may be generally cylindrical in shape and may have an internal diameter of at least about 40.64 cm (16 inches). The cutting chambers may be at least partially enclosed to help re-cut and mulch clippings, or may be interconnected to allow flow between the chambers and discharge clippings through discharge opening 107 from cutting chamber 106.

The twin belt mule drive includes a pair of endless belts 108, 109, each belt transmitting power from the same horizontally oriented drive shaft or PTO to at least one of three vertically oriented spindles 110, 111, 112. One of the belts drives one rotary blade, and the other belt drives two blades. For example, the first or lower belt 108 may drive spindle 112 for blade 133 in cutting chamber 106 near the discharge opening, and the second or lower belt 109 may drive spindles 110, 111 for blades 131, 132 in cutting chambers 104, 105.

In one embodiment, two separated mule drives may be provided, both mule drives driven by the same drive shaft or PTO behind the mower deck. The drive shaft or PTO may have a pair of drive sheaves 113, 114 mounted thereto. Drive sheave 114 may engage the first or lower belt 108, and drive sheave 113 may engage the second or upper belt 109.

The twin belt mule drive includes a first pair of guide sheaves 115, 116 and a second pair of guide sheaves 117, 118. One pair of guide sheaves may be on the tension side of the belts, and the other pair may be on the slack side of the belts. The first and second pairs of guide sheaves may be positioned generally below the drive sheaves and behind the mower deck. The first and second pairs of guide sheaves twist belts 108, 109 from a generally vertical to a generally horizontal plane.

In one embodiment, the first pair of guide sheaves 115, 116 may be mounted to a common shaft and may have the same horizontal axis that is transverse to the drive shaft or PTO. However, each guide sheave 115, 116 may rotate independently of the other. Similarly, the second pair of guide sheaves 117, 118 may be mounted to a common shaft with the same horizontal axis that is transverse to the drive shaft or PTO, but each guide sheave 117, 118 rotates independently of the other.

In one embodiment, to have adequate room for two belts in a horizontal plane over the mower deck, two different sheave sizes may be used. Thus, the first or lower belt 108 may be in a horizontal plane below the second or upper belt 109, and the two planes may be separated by between about 2 cm and about 5 cm. For example, first drive sheave 113 may have a larger outer diameter than second drive sheave 114. First drive sheave 113 may have an outer diameter of between about 8 cm and about 20 cm, which may be at least about 25% larger than the outer diameter of second drive sheave 114, and preferably at least about 50% larger than the second drive sheave.

In one embodiment, each pair of guide sheaves also may include a larger diameter guide sheave and a smaller diameter guide sheave. Thus, guide sheave 115 may have a larger outer diameter than guide sheave 116, and guide sheave 117 may have a larger outer diameter than guide sheave 118. For example, the diameter of each larger guide sheave may be between about 8 cm and about 20 cm, which may be at least about 25% larger than the diameter of the smaller guide sheaves, and preferably at least about 50% larger than the smaller guide sheaves.

In one embodiment, the twin belt mule drive may transmit power to driven sheaves connected to the upper ends of vertical spindles 110-112. Driven sheave 119 may be connected to the upper end of spindle 110 extending into the left cutting chamber 104. Driven sheave 120 may be connected to the upper end of spindle 112 extending into the right cutting chamber 106. A pair of sheaves 121, 122 may be connected to the upper end of spindle 111 which extends into the center cutting chamber 105. A cutting blade may be attached to the lower end of each spindle. The outer diameter of each driven sheave may be between about 8 cm and about 20 cm.

In one embodiment, only one of the pair of sheaves 121, 122 drives the middle spindle 111, and the other sheave spins. Preferably, the second or upper belt engages sheave 121 to drive the middle spindle. In one embodiment, driven sheave 120 may be positioned at a horizontal plane below that of driven sheave 119, to allow sufficient clearance between the first or lower belt 108 and the second or upper belt 109.

In one embodiment, idler sheaves 123, 124 may be mounted on or above top surface 102 of deck 100. Idler sheave 123 may be spring biased with a belt tensioning mechanism 125 to provide tension and take-up in belt 108. Idler sheave 124 may be mounted in a fixed position on the mower deck. In one embodiment, the second pair of guide sheaves 117, 118 may be spring biased using a belt tensioning mechanism 126 to provide tension and take-up in belt 109. The belt tensioning mechanisms also may provide a clutching function to controllably engage or disengage the belts from transmitting rotational torque from the drive sheaves to the driven sheaves.

In one embodiment, each of the two belts may engage at least one driven sheave that is not engaged by the other belt. For example, belt 108 may engage driven sheave 120 to turn mower blade 133 in the right cutting chamber 106, and belt 109 may engage driven sheave 119 to turn mower blade 131 in the left cutting chamber 104. Both belts may engage sheaves on the spindle in the center cutting chamber 105, but in one embodiment, only one of the sheaves may rotate the spindle to turn mower blade 132.

In one embodiment, the twin belt mule drive of the present invention may help extend and prolong belt life by requiring less load on and through each of the two belts, when compared to a mule drive with a single belt. In particular, the twin belt mule drive may result in less load per belt resulting from starts and stops of the engine drive shaft or PTO, or impact loads. Accordingly, the twin belt mule drive of the present invention provides simple and economical solution for power transmission using only two belts between a drive shaft or PTO and three rotary cutting blades.

Having described the preferred embodiment, it will become apparent that various modifications can be made without departing from the scope of the invention as defined in the accompanying claims.

## Claims

1. A mower deck (100) having three rotary cutting blades (131, 132, 133) mounted to the lower ends of three vertical spindles (110, 111, 112), wherein:
a first drive sheave (114) and a second drive sheave (113) are mounted to a preferably horizontal drive shaft,
a first guide sheave (115, 116) and a second guide sheave (117, 118) are mounted to a preferably horizontal shaft,
three driven sheaves (119, 120, 121) are mounted to the vertical spindles (110, 111, 112),
a first endless belt (108) is engaging the first drive sheave (114), the first guide sheave (115, 117), and at least one of the driven sheaves (120, 121),
and a second endless belt (109) is engaging the second drive sheave (113), the second guide sheave (116, 118), and at least one of the driven sheaves (119) not engaged by the first endless belt (108),
**characterized in that** the shaft to which the first guide sheave (115, 116) and the second guide sheave (117, 118) are mounted is transverse to the drive shaft.

2. The mower deck according to claim 1, **characterized by** a first idler sheave (123) engaged by the first endless belt (108) and/or a second idler sheave (124) engaged by the second endless belt (109), preferably at least one of the idler sheaves (123, 124) pivotably coupled to a spring to controllably tension a belt (108, 109).

3. The mower deck according to claim 1 or 2, **characterized in that** the first drive sheave (114) has a larger outer diameter than the second drive sheave (113) and/or that the first guide sheave (115, 117) has a larger outer diameter than the second guide sheave (116, 118).

4. The mower deck according to claim 3, **characterized in that** each larger diameter sheave (113, 117, 115) is at least 50% larger in outer diameter than another sheave (114, 116, 118) and/or wherein the first larger diameter drive sheave (113) has an outer diameter at least 50% larger than the second smaller diameter drive sheave (114).

5. The mower deck according to one or several of the preceding claims, **characterized by** a first pair of guide sheaves (115, 117) and a second pair of guide sheaves (116, 118), each pair of guide sheaves (115, 116, 117, 118) mounted on a separate preferably horizontal shaft transverse to the drive shaft.

6. The mower deck according to one or several of the previous claims, **characterized in that** the drive sheaves (113, 114) and the guide sheaves (115, 116, 117, 118) are positioned behind the mower deck (100).

7. The mower deck according to one or several of the previous claims, **characterized by** a belt tensioner (126) on at least one of the guide sheaves (115, 116, 117, 118), wherein preferably at least one of the guide sheaves (115, 116, 117, 118) are pivotably coupled to a spring to controllably tension a belt (108, 109).

8. The mower deck according to one or several of the previous claims, **characterized in that** the first endless belt (108) is in a horizontal plane on the mower deck (100) below the second endless belt (109).

9. The mower deck according to one or several of the previous claims, **characterized in that** each guide sheave (115, 116, 117, 118) rotates independently of the other guide sheaves (115, 116, 117, 118).

## Patentansprüche

1. Mähwerk (100) mit drei rotierenden Schneidmessern (131, 132, 133), die an den unteren Enden von drei vertikalen Spindeln (110, 111, 112) angebracht sind, wobei:
eine erste Antriebsriemenscheibe (114) und eine zweite Antriebsriemenscheibe (113) auf einer vorzugsweise horizontalen Antriebswelle angebracht sind,
eine erste Führungsriemenscheibe (115, 116) und
eine zweite Führungsriemenscheibe (117, 118) auf einer vorzugsweise horizontalen Welle angebracht sind,
drei angetriebene Riemenscheiben (119, 120, 121) auf den vertikalen Spindeln (110, 111, 112) angebracht sind,
ein erster Endlosriemen (108) die erste Antriebsriemenscheibe (114), die erste Führungsriemenscheibe (115, 117) und mindestens eine der angetriebenen Riemenscheiben (120, 121) in Eingriff nimmt,
und ein zweiter Endlosriemen (109) die zweite Antriebsriemenscheibe (113), die zweite Führungsscheibe (116, 118) und mindestens eine der angetriebenen Riemenscheiben (119), die von dem ersten Endlosriemen (108) nicht in Eingriff genommen wird, in Eingriff nimmt,
**dadurch gekennzeichnet, dass** sich die Welle, an der die erste Führungsriemenscheibe (115, 116) und die zweite Führungsriemenscheibe (117, 118) angebracht sind, quer zur Antriebswelle erstreckt.

2. Mähwerk nach Anspruch 1, **gekennzeichnet durch** eine erste Laufriemenscheibe (123), die von dem ersten Endlosriemen (108) in Eingriff genommen wird, und/oder eine zweite Laufriemenscheibe (124), die von dem zweiten Endlosriemen (109) in Eingriff genommen wird, wobei vorzugsweise mindestens eine der Laufriemenscheiben (123, 124) schwenkbar an eine Feder gekoppelt ist, um einen Riemen (108, 109) steuerbar zu spannen.

3. Mähwerk nach Anspruch 1 oder 2, **dadurch gekennzeichnet, dass** die erste Antriebsriemenscheibe (114) einen größeren Außendurchmesser aufweist als die zweite Antriebsriemenscheibe (113) und/oder dass die erste Führungsriemenscheibe (115, 117) einen größeren Außendurchmesser aufweist als die zweite Führungsriemenscheibe (116, 118).

4. Mähwerk nach Anspruch 3, **dadurch gekennzeichnet, dass** jede einen größeren Durchmesser aufweisende Riemenscheibe (113, 117, 115) einen um mindestens 50% größeren Außendurchmesser aufweist als eine andere Riemenscheibe (114, 116, 118) und/oder wobei die erste einen größeren Durchmesser aufweisende Antriebsriemenscheibe (113) einen Außendurchmesser aufweist, der um mindestens 50% größer ist als die zweite einen kleineren Durchmesser aufweisende Antriebsriemenscheibe (114).

5. Mähwerk nach einem oder mehreren der vorhergehenden Ansprüche, **gekennzeichnet durch** ein erstes Paar Führungsriemenscheiben (115, 117) und ein zweites Paar Führungsriemenscheiben (116, 118), wobei jedes Paar Führungsriemenscheiben (115, 116, 117, 118) auf einer getrennten, vorzugsweise horizontalen Welle angebracht ist, die sich quer zur Antriebswelle erstreckt.

6. Mähwerk nach einem oder mehreren der vorhergehenden Ansprüche, **dadurch gekennzeichnet, dass** die Antriebsriemenscheiben (113, 114) und die Führungsriemenscheiben (115, 116, 117, 118) hinter dem Mähwerk (100) positioniert sind.

7. Mähwerk nach einem oder mehreren der vorhergehenden Ansprüche, **gekennzeichnet durch** einen Riemenspanner (126) an mindestens einer der Führungsriemenscheiben (115, 116, 117, 118), wobei vorzugsweise mindestens eine der Führungsriemenscheiben (115, 116, 117, 118) schwenkbar an eine Feder gekoppelt ist, um einen Riemen (108, 109) steuerbar zu spannen.

8. Mähwerk nach einem oder mehreren der vorhergehenden Ansprüche, **dadurch gekennzeichnet, dass** sich der erste Endlosriemen (108) in einer horizontalen Ebene auf dem Mähwerk (100) unter dem zweiten Endlosriemen (109) befindet.

9. Mähwerk nach einem oder mehreren der vorhergehenden Ansprüche, **dadurch gekennzeichnet, dass** sich jede Führungsriemenscheibe (115, 116, 117, 118) unabhängig von den anderen Führungsriemenscheiben (115, 116, 117, 118) dreht.

## Revendications

1. Châssis de tondeuse (100) ayant trois lames de coupe rotatives (131, 132, 133) montées sur les extrémités inférieures de trois broches verticales (110, 111, 112), dans lequel :
un premier rouet d'entraînement (114) et un deuxième rouet d'entraînement (113) sont montés sur un arbre d'entraînement de préférence horizontal,
un premier rouet de guidage (115, 116) et un deuxième rouet de guidage (117, 118) sont montés sur un arbre de préférence horizontal,
trois rouets entraînés (119, 120, 121) sont montés sur les broches verticales (110, 111, 112),
une première courroie sans fin (108) s'engage avec le premier rouet d'entraînement (114), le premier rouet de guidage (115, 117) et au moins l'un des rouets entraînés (120, 121),
et une deuxième courroie sans fin (109) s'engage avec le deuxième rouet d'entraînement (113), le deuxième rouet de guidage (116, 118) et au moins l'un des rouets entraînés (119) qui n'est pas en prise avec la première courroie sans fin (108),
**caractérisé en ce que** l'arbre sur lequel le premier rouet de guidage (115, 116) et le deuxième rouet de guidage (117, 118) sont montés est transversal à l'arbre d'entraînement.

2. Châssis de tondeuse selon la revendication 1, **caractérisé par** un premier rouet fou (123) en prise avec la première courroie sans fin (108) et/ou un deuxième rouet fou (124) en prise avec la deuxième courroie sans fin (109), de préférence au moins l'un des rouets fous (123, 124) étant accouplé de manière pivotante à un ressort pour tendre une courroie (108, 109) de manière contrôlable.

3. Châssis de tondeuse selon la revendication 1 ou 2, **caractérisé en ce que** le premier rouet d'entraînement (114) a un diamètre extérieur plus grand que le deuxième rouet d'entraînement (113), et/ou **en ce que** le premier rouet de guidage (115, 117) a un diamètre extérieur plus grand que le deuxième rouet de guidage (116, 118).

4. Châssis de tondeuse selon la revendication 3, **caractérisé en ce que** chaque rouet de plus grand diamètre (113, 117, 115) a un diamètre extérieur au moins 50% plus grand qu'un autre rouet (114, 116, 118) et/ou dans lequel le premier rouet d'entraînement de plus grand diamètre (113) a un diamètre extérieur au moins 50% plus grand que le deuxième rouet d'entraînement de plus petit diamètre (114).

5. Châssis de tondeuse selon l'une quelconque ou plusieurs des revendications précédentes, **caractérisé par** une première paire de rouets de guidage (115, 117) et une deuxième paire de rouets de guidage (116, 118), chaque paire de rouets de guidage (115, 116, 117, 118) étant montée sur un arbre séparé de préférence horizontal transversal à l'arbre d'entraînement.

6. Châssis de tondeuse selon l'une quelconque ou plusieurs des revendications précédentes, **caractérisé en ce que** les rouets d'entraînement (113, 114) et les rouets de guidage (115, 116, 117, 118) sont positionnés derrière le châssis de tondeuse (100).

7. Châssis de tondeuse selon l'une quelconque ou plusieurs des revendications précédentes, **caractérisé par** un tendeur de courroie (126) sur au moins l'un des rouets de guidage (115, 116, 117, 118), dans lequel de préférence au moins l'un des rouets de guidage (115, 116, 117, 118) est accouplé de manière pivotante à un ressort pour tendre une courroie (108, 109) de manière contrôlable.

8. Châssis de tondeuse selon l'une quelconque ou plusieurs des revendications précédentes, **caractérisé en ce que** la première courroie sans fin (108) est dans un plan horizontal sur le châssis de tondeuse (100) en dessous de la deuxième courroie sans fin (109).

9. Châssis de tondeuse selon l'une quelconque ou plusieurs des revendications précédentes, **caractérisé en ce que** chaque rouet de guidage (115, 116, 117, 118) tourne indépendamment des autres rouets de guidage (115, 116, 117, 118).
